Europäisches Patentamt

European Patent Office

Office européen des brevets

(11) Veröffentlichungsnummer: **0 236 689**
**A2**

(12) # EUROPÄISCHE PATENTANMELDUNG

(21) Anmeldenummer: 87100599.7

(22) Anmeldetag: 19.01.87

(51) Int. Cl.³: **A 01 N 43/32**
A 01 N 43/653, A 01 N 47/42
A 01 N 53/00, A 01 N 43/84
A 01 N 43/76, A 01 N 43/60
A 01 N 43/54, A 01 N 43/50
A 01 N 43/40
//A01N25/30, (A01N43/32, 43:08,
41:04, 37:46), (A01N43/653,
43:32, 41:04), (A01N47/42,
43:32, 41:04), (A01N53/00,
43:32, 41:04), (A01N43/84,
43:32, 41:04), (A01N43/76,
43:32), A01N41:04

(30) Priorität: 27.01.86 DE 3602318
27.01.86 DE 3602311
27.01.86 DE 3602317

(43) Veröffentlichungstag der Anmeldung:
16.09.87 Patentblatt 87/38

(84) Benannte Vertragsstaaten:
AT BE CH DE ES FR GB GR IT LI NL SE

(71) Anmelder: CELAMERCK GmbH & Co. KG
Binger Strasse 173
D-6507 Ingelheim am Rhein(DE)

(72) Erfinder: Itzel, Hanshelmut, Dr.
Im Herzenacker 51
D-6535 Gau-Algesheim(DE)

(72) Erfinder: Heupt, Wilfried, Dr.
Bousermühle 1
5509 Malborn(DE)

(72) Erfinder: Drandarevski, Cristo, Dr.
Boehringerstrasse 8
6507 Ingelheim am Rhein(DE)

(72) Erfinder: Garrecht, Manfred, Dr.
Im Graben 4
6501 Wackernheim(DE)

(72) Erfinder: Rohrbach, Kurt-Ulrich, Dr.
Am Langenberg 16
6507 Ingelheim am Rhein(DE)

(72) Erfinder: Albert, Guido, Dr. Dipl.-Ing.
Volxheimer Strasse 4
6551 Hackenheim(DE)

(54) Fungizide Mittel.

(57) Neue fungizid wirksame Kombination von Dithianon mit einem oligomeren oder polymeren Naphthalinsulfonsäure-Formaldehyd-Kondensationsprodukt bzw. Salzen davon und/oder mindestens einem weiteren Fungizid des F1- und/oder F2-Typs zeigen gegenüber den Einzelwirkstoffen verbesserte Wirksamkeit.

Die Erfindung betrifft neue fungizide Kombinationen, enthaltend Dithianon (5,10-Dihydro-5,10-dioxo-naphtho-[2,3-b]-1,4-dithiin-2,3-dicarbonitril) und oligomere bzw. polymere Naphthalinsulfonsäure-Formaldehyd-Kondensationsprodukte (NFK) oder NFK-Salze.

Des weiteren betrifft die Erfindung neue fungizide Mittel, enthaltend Dithianon und mindestens ein weiteres Fungizid, dessen Wirkung auf der Hemmung der Ergosterol-Biosynthese (Fungizid des Typs F1) oder der RNS-Polymerase (Fungizid des Typs F2) beruht.

Des weiteren betrifft die Erfindung neue fungizide Mittel enthaltend Dithianon sowie mindestens ein weiteres Fungizid des Typs F1 und/oder F2 und einen zur Gruppe der Naphthalinsulfonsäure-Formaldehyd-Kondensationsprodukte (NFK) gehörenden Stoff.

Es ist bekannt, daß Dithianon als protektives Fungizid gegen zahlreiche Blatt- und Fruchtkrankheiten wirksam ist. Auf Grund seiner niedrigen Löslichkeit in den meisten gebräuchlichen Lösungsmitteln ist ein im Pflanzenschutz anwendbares Dithianon-Präparat nur als Suspensionspulver (WP) oder als Suspensions-Konzentrat (SC) herzustellen.

Es ist weiterhin bekannt, daß pflanzenpathogene Pilze gegenüber fungiziden Wirkstoffen Resistenz entwickeln können. Es ist auch bekannt, daß mitunter durch Kombination verschiedener Wirkstoffe eine über die rein additive Einzelwirkung hinausgehende Wirkung und auch Resistenzbrechnung erreicht werden kann. Die beiden Effekte - Resistenzbrechung und Synergismus - sind eine wertvolle Bereicherung der Bekämpfungsmaßnahmen im Pflanzenschutz.

Es wurde nun gefunden, daß Kombinationen von Dithianon mit oligomeren bzw. polymeren Naphthalinsulfonsäure-Formaldehyd-Kondensationsprodukten sowie deren Alkali-, Erdalkali- oder Ammonium-Salzen eine überraschende Wirkungsverbesserung gegenüber den aus dem Stand der Technik bekannten Präperaten zeigen.

Weiterhin wurde gefunden, daß bestimmte neue Kombinationen des fungiziden Wirkstoffs Dithianon mit fungiziden Stoffen, deren Wirkung auf der Hemmung der Ergosterol-Biosynthese (Fungizide des Typs F1) oder auf der Hemmung der RNS-Polymerase (Fungizide des Typs F2) beruht, eine deutliche Verbesserung der Fungizid-Wirkung zeigen, was auf eine Resistenzbrechung bzw. auf einen Synergismus hinweist.

Diese verbesserte Wirkung solcher neuer Kombinationen kann überraschenderweise noch gesteigert werden durch Zusatz von oligomeren bzw. polymeren Naphthalinsulfonsäure-Formaldehyd-Kondensationsprodukten bzw. ihren Salzen.

Stoffe, die die Ergosterol-Biosythese hemmen (Fungizide des Typs F1) sind z.B.

F1.1:   Fenarimol; α-(2-Chlorphenyl)-α-(4-chlor-phenyl)-5-pyrimidinmethanol (CAS No 60168-88-9)

F1.2:   Bitertanol (Biloxazol); 3,3-Dimethyl-1-(biphenyl-4-yl-oxy)- 1-(1,2,4-triazol-1-yl)-butan-2-ol (CAS No 55179-31-2)

Fl.3:     Prochloraz; N-Propyl-N-[2-(2,4,6-trichlorphenoxy)-
          ethyl]-1H-imidazol-1-carbonsäureamid. (CAS No
          67747-09-5]

Fl.4:     Etaconazol; 1-[[2-(2,4-Dichlorphenyl)-4-ethyl-1,3-
          dioxolan-2-yl]methyl]-1H-1,2,4-triazol (CAS No
          60207-93-4)

Fl.5:     Penconazol; 1-(1,2,4-Triazol-1-yl)-2-(2,4-dichlorphenyl)-pentan (CAS No 87501-25-5)

Fl.6:     Myclobutanil; Lit. Agr. Chem. Dev. Rew. III 1985

Fl.7:     Flutriafol; 1-(2-Fluorphenyl)-1-(4-fluorphenyl)-2-
          (1,2,4-triazol-1-yl)-ethanol

Fl.8:     Flusiafol; bis-(4-Fluorphenyl)-methyl-(1,2,4-
          triazol-1-yl-methyl)-silan (CAS No 96827-34-8)

Fl.9:     Triforin;
          N,N'-[1,4-Piperazindiyl-bis(2,2,2-trichlor-
          ethyliniden)] bis-formamid (CAS No 26644-46-2)

Fl.10:    Buthiobat; Dithiocarbimidsäure-N-pyridin-3-yl-S-
          butyl-S-(4-tert-butylphenylmethyl)-ester (CAS No
          51308-54-4)

Fl.11:    EL 241; α,α-bis-(4-Chlor-phenyl)-3-
          pyridinylmethanol (CAS No 17781-31-6)

Fl.12:    Nuarimol; α-(2-Chlorphenyl)-α- (4-fluor-
          phenyl-5-pyrimidinylmethanol (CAS No 63284-71-9)

Fl.13: Triarimol; α-(2,4-Dichlorphenyl)-α-phenyl-
5-pyrimidinylmethanol (CAS No 26766-27-8)

Fl.14: Fenpropidin; 1-[3-(4-tert-Butyl-phenyl)-2-
methyl-propyl]piperidin (CAS No 67306-00-7)

Fl.15: Imazalil; 1-[2-(2,4-Dichlorphenyl)-2-(2-
propenyloxy)ethyl-1H-imidazol (CAS No 35554-44-0)

Fl.16: Fenapanil; 2-Cyano-2-phenyl-1-imidazol-1- yl-hexan
(CAS No  61019-78-1)

Fl.17: Pirifenox;

Fl.18: Dichlobutrazol; ß-[(2,4-Dichlorphenyl)methyl]-
α-(1,1-dimethylethyl)-1H-1,2,4-Triazol-1-ethanol

Fl.19: Fluotrimazol; 1-[Diphenyl-(3-trifluormethylphenyl)-methyl]-1,2,4-triazol (CAS No 31251-03-3)

Fl.20: Propiconazol; 1-[[2-(2,4-Dichlorphenyl)-4-
propyl-1,3-dioxolan-2-yl]methyl]-1H-1,2,4-triazol
(CAS No 60207-90-1)

Fl.21: Triadimefon; 1-(4-Chlorphenoxy)-3,3-dimethyl-1-
(1H-1,2,4-triazol-1-yl)-butan-2-on (CAS No
43121-43-3)

Fl.22: Triadimenol; 1-(4-Chlorphenoxy)-1-(1,2,4-
triazol-1-yl)-3,3-dimethyl-propan-2-ol (CAS No
55219-65-3)

F1.23:  PP 969; 5-Hydroxy-1,1,6,6-tetramethyl-4-
(1,2,4-triazol-1-yl)hexan-2-on = Hexaconasol

F1.24:  Dodemorph; 2,6-Dimethyl-4-cyclodedeylmorpholin
(CAS No 1593-77-7)

F1.25:  Fenpropimorph; 4-[3-[4-(1,1-Dimethylethyl)phenyl]-2-methylpropyl]-2,6-dimethyl-
morpholin (CAS No 67306-03-0)

F1.26:  Tridemorph; 2,6-Dimethyl-4-tridecanylmorpholin

Stoffe, die die RNS-Polymerase hemmen (Fungizide des Typs
F2) sind z.B.:

F2.1:  Benalaxyl; N-(2,6-Dimethylphenyl)-N-
phenylacetyl-DL-alanin-methylester (CAS No
71626-11-4)

F2.2:  Oxadixyl; N-(2,6-Dimethylphenyl)-N-
(oxazolidin-3-yl)methoxyacetamid

F2.3  Milfuran; 2-Chlor-N-(2,6-dimethyl-phenyl)-
N-(tetra-hydro-2-oxo-3-furanyl)-acetamid (CAS No
58810-48-3)

F2.4:  Cyprofuran; N-(3-Chlorphenyl)-N-(tetra-
hydro-2-oxo-3-furanyl)-cyclopropancarboxamid
(CAS No 69581-33-5)

F2.5:  Furalaxyl; N-(2,6-Dimethylphenyl)-N-
(2-furanyl-carbonyl)-DL-alanin-methylester
(CAS No. 57646-30-7)

Die Erfindung betrifft somit insbesondere die Kombination von Dithianon mit den unter Fl.1 bis Fl.26 sowie F2.1 bis F2.5 beschriebenen Wirkstoffen.

Die Wirkstoffe können innerhalb weiter Grenzen miteinander kombiniert werden. Bevorzugt ist jedoch ein höherer Dithianongehalt, so daß das Verhältnis Dithianon zu Fl und/oder F2 im Bereich von 1 : 1 bis 30 : 1, vorzugsweise 3 : 1 bis 15 : 1 liegt.

Zahlreiche Oligomere bzw. Polymere aus Naphthalinsulfonsäure und Formaldehyd sowie deren Alkali-, Erdalkali-, und Ammoniumsalze sind bekannt. Sie werden als Emulgier- bzw. Dispergiermittel von vielen Herstellern angeboten.

Zu nennen sind nachstehende Handelspräparate:

Morwet D 425, Hersteller Petrochem, USA (Natriumsalz eines Oligomers aus Naphthalinsulfonsäure und Formaldehyd; mittlere Molekülgröße etwa 4 Naphthalinsulfonsäureeinheiten)

Supragil MNS 90, Rhone-Poulenc, Frankreich

Solegal A, Hoechst AG, Deutschland

Sandoperol O, Sandoz AG, Schweiz

Die Naphthalinsulfonsäure-Formaldehyd-Kondensationsprodukte liegen vorzugsweise ganz oder teilweise in Form
ihrer Salze mit Alkali-, Erdalkali- oder Ammoniumionen vor.

Alkalisalze sind Lithium-, Natrium- oder Kaliumsalze,
vorzugsweise Natriumsalze. Erdalkalisalze sind Beryllium-,
Magnesium- oder Calciumsalze.
Als Ammoniumsalze sind zu nennen die durch Protonierung
von primären, sekundären oder tertiären Alkylaminen sowie
Ammoniak erhältlichen Kationen sowie die durch
Protonierung cyclischer stickstoffhaltiger Amine, wie
Morpholin, Piperidin und Piperazin erhältlichen Kationen.
Bevorzugt ist ein Mengenverhältnis von Dithianon zu NFK
bzw. NFK-Salze von 7 : 1 bis 80 : 1, besonders bevorzugt
ist der Bereich von 10 : 1 bis 60 : 1.

Die erfindungsgemäßen fungiziden Wirkstoffkombinationen
des Dithianons mit den Fungiziden des Typs F1 und/oder F2
und/oder mit oligomeren oder polymeren
Naphthalinsulfonsäure-Formaldehyd-Kondensationsprodukten
(NFK) bzw. NFK-Salzen, können nach an sich bekannten
Verfahren durch Zumischung geeigneter Streck- und
Hilfsmittel zu gebrauchsfertigen Lösungen, Emulsionen,
Pasten, Suspensionen, Pulvern oder Granulaten hergerichtet
werden.

Die so erhaltenen fungiziden Zubereitungen können dann
direkt als Stäubemittel, Suspensionen, ULV-Formulierung
oder mikroverkapselt als antimikrobielles Mittel
ausgebracht werden. Im Falle von höherkonzentrierten
Zubereitungen, etwa bei Suspensionskonzentraten (SC),
Suspensionspulvern (WL), Emulsionskonzentraten (EC) oder
wasserdispergierbaren Granulaten (WG), können die
erfindungsgemäßen Zubereitungen mit einem Streckmittel –
vorzugsweise Wasser – zu Spritzbrühen der geeigneten Anwendungskonzentration verdünnt werden.

Als Streck- und Hilfsmittel sind zu nennen: Lösungsmittel, feste Trägerstoffe sowie gegebenenfalls oberflächenaktive Verbindungen.

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohle und Glykole sowie deren Ether und Ester, wie Methanol, Ethanol, Propanol, Isopropanol, Ethylenglykol, Ethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle, wie epoxidiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder andere künstliche oder natürliche Polymere wie etwa Methylcellulose oder Ethylcellulose zugesetzt werden.

Als oberflächenaktive Verbindungen kommen je nach der Art des zu formulierenden Wirkstoffes nichtionogene, kationen- und/oder anionenaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen als auch wasserlösliche synthetische oberflächenaktive Verbindungen sein.

Als Seifen seien die Alkali-, Erdalkali- oder gegebenenfalls substituierte Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss- oder Talöl gewonnen werden können, genannt. Ferner sind auch die Fettsäuremethyltaurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfate oder -sulfonate liegen in der Regel als Alkali-, Erdalkali- oder gegebenenfalls substituierte Ammoniumsalze vor und können einen Alkylrest mit 8 bis 22 C-Atomen aufweisen, wobei Alkyl auch den Alkylteil von Acylresten einschliesst, z.B. das Na- oder Ca-Salz der Ligninsulfonsäure, der Dodecylschwefelsäure Naphthalinsulfonsäure oder eines aus natürlichen Fettsäuren hergestellten Fettalkoholsulfatgemisches.

Alkylarylsulfonate sind z.B. die Na-, Ca- oder Triethanolaminsalze der Dodecylbenzolsulfonsäure, oder der Dibutylnaphthalinsulfonsäure

Ferner kommen auch entsprechende Phosphate wie z.B. Salze des Phosphorsäureesters eines p-Nonylphenol-(4-14)-Ethylenoxid-Adduktes oder Phospholipide in Frage.

Als nicht ionische Tenside kommen in erster Linie Polyglykoletherderivate von aliphatischen oder

cycloaliphatischen Alkoholen, gesättigten oder
ungesättigten Fettsäuren und Alkylphenolen in Frage.

Als Beispiele nichtionischer Tenside seien
Nonylphenolpolyethoxyäthanole, Ricinusölpolyglykolether, Polypropylen-Polyäthylenoxid-addukte, Tributylphenoxypolyethoxyethanol, Polyethylenglykol und Octylphenoxypolyethoxyethanol erwähnt.

Antigefriermittel sind z.B. Ethylglycol oder
Propylenglycol.

Die in der Formulierungstechnik gebräuchlichen Tenside
sind u.a. in der folgenden Publikation beschrieben:

"Mc Cutcheon's Detergents and Emulsifiers Annual" MC
Publishing Corp. Ridgewood, New Jersey, 1981;

Die Mittel werden vorzugsweise in Form als
Suspensionspulver (WP), Suspensions-Konzentrat (SC) oder
als wasserdispergierbare Granulate (WG) formuliert und
können nach Verdünnung auf Anwendungskonzentration durch
Versprühen, Verstäuben, Verstreuen, Verstreichen oder
Gießen ausgebracht werden.

Nachstehende Beispiele sollen die Erfindung näher
erläutern.

Beispiel 1: Formulierungen von Dithianon als WP

1a Stand der Technik

| | |
|---|---|
| Dithianon | 750 g |
| Ca-Lignosulfonat | 150 g |
| Na-Naphthalinsulfonat | 15 g |
| Kaolin | ad 1000 g |

Beispiel 2: Formulierung von Dithianon als SC

2a Stand der Technik

| | |
|---|---|
| Dithianon | 250 g |
| Polyoxyethylenalkenylether | 20 g |
| Renex 20 | 2,5 g |
| Entschäumer | 1,0 g |
| Verdicker | 27,5 g |
| Wasser | ad 1000 g |

2b erfindungsgemäß

| | |
|---|---|
| Dithianon | 575 g |
| MFK-Na-Salz | |
| (Morwet D 425) | 15 g |
| Antigefriermittel | 50 g |
| Wasser | ad 1000 g |

2c erfindungsgemäß

| | |
|---|---|
| Dithianon | 575 g |
| NFK-Na-Salz | |
| (Morwet D 425) | 50 g |
| Antigefriermittel | 50 g |
| Wasser | ad 1000 g |

<u>2d erfindungsgemäß</u>

| | |
|---|---|
| Dithianon | 575 g |
| NFK-Na-Salz | |
| (Morwet D 425) | 10 g |
| Antigefriermittel | 50 g |
| Wasser | ad 1000 g |

Formulierungsbeispiele für Kombinationen

a)    Dithianon                       500 g/Ltr.

       Penconazol                  50

       MFK-Salz

       (Norwet D 425)            20

       Antigefriermittel        50

       Wasser       ad       1000

b)    Dithianon                       500 g/Ltr.

       Penconazol                150

       MFK-Salz                 10

       Antigefriermittel        50

       Wasser       ad       1000

c)    Dithianon                       375 g/Ltr.

       Penconazol                25

       MFK-Salz                 15

       Antigefriermittel        50

       Wasser       ad       1000

d)    Dithianon                       300 g/Ltr.

       Myclobutanil             30

       MFK-Salz                 50

       Antigefriermittel        50

       Wasser       ad       1000

e)    Dithianon                       500 g/Ltr.

       Propiconazol             125

       MFK-Salz                 15

       Antigefriermittel        50

       Wasser       ad       1000

| f) | Dithianon | 375 g/Ltr. |
| | Propiconazol | 62 |
| | MFK-Salz | 15 |
| | Antigefriermittel | 50 |
| | Wasser ad | 1000 |

Die Herstellung der Zubereitungen nach den Beispielen geschieht auf dem üblichen Weg durch Mischen und Mahlen der Wirkstoffe zusammen mit den Hilf- und Trägerstoffen, wobei im Falle von Flüssigformulierungen eine trockene Vermahlung mit Stiftmühlen o.ä., im Falle der flüssigen Vermahlung eine Naßvermahlung mit Kugel- oder Perlmühlen zur Anwendung kommt. Wasserdispergierbare Granulate können z.B. durch Granulierung im Wirbelbett hergestellt werden.

Nachfolgende Beispiele belegen die überraschenden Wirkungssteigerung der erfindungsgemäßen Kombinationen.

Zur Untersuchung der biologischen Wirkung werden die nach den Beispielen 1 und 2 hergestellten Konzentrate mit Wasser bis zur jeweils angegebenen Wirkstoff-Konzentration verdünnt und als Spritzbrühen auf die zu behandelnden Pflanzenteile tropfnaß aufgebracht.

## Beispiel 3: Wirkung gegen Alternaria-Flecken am Apfel

In einem elfjährigen Stand der Sorte Starking Delicious wurden 3 Triebe je Block 3 mal in 14-tägigem Intervall mit einer Spritzbrühe mit einem Dithianongehalt von 700 ppm behandelt.
14 Tage nach der letzten Spritzbrühenapplikation wurde die Zahl der aufgetretenen Flecken bestimmt. Die Schwere der Infektion (DS) wurde in einem vierstufigen Bonitierungsschema bestimmt.

Dabei sind:

$X_A$ =     Zahl der unbefallenen Blätter

$X_B$ =     Zahl der befallenen Blätter mit 1 bis 5 Flecken

$X_C$ =     Zahl der befallenen Blätter mit 6 bis 10 Flecken

$X_D$ =     Zahl der befallenen Blätter mit 11 und mehr Flecken

Die Werte für DS wurden gemäß nachstehender Gleichung ermittelt:

$$DS = \frac{XB + 2XC + 3XD}{3\,[XA + XB + XC + XD]} \cdot 100$$

Aus den so erhaltenen DS Werten für die behandelten und unbehandelten Versuchsglieder wurde der Wirkungsgrad in [%] bestimmt nach:

$$\text{Wirkungsgrad} = \frac{DS\text{-behandelt}}{DS\text{-unbehandelt}} \cdot 100$$

Man findet:

Mittel nach Beispiel 1a : Aufwandmenge 700 ppm Dithianon, Wirkungsgrad 71 %

Mittel nach Beispiel 2b : Aufwandmenge 700 ppm Dithianon, Wirkungsgrad 82 %

**Beispiel 4:   Wirkungsvergleich gegen Kräusel-Krankheit des Pfirsich**

Bei Pfirsichbäumen der Sorte South Haven wurden 2 Bäume je Parzelle tropfnaß gespritzt und 2 Monate nach der Anwendung boniteirt, wobei zur Auswertung frisch ausgetriebene Blattbüschel in 5-Blatt-Stadium herangezogen werden.

Die Versuchsglieder werden 4 mal wiederholt. Je Versuchsglied werden 200 Büschel je Parzelle boniteirt. Es werden so die befallenen Blattbüschel in Prozent ermittelt und der Wirkungsgrad der einzelnen Dithianon Formulierungen im Vergleich zur unbehandelten Kontrolle ermittelt.

Man findet:

| Dithianon [ppm] | %-Befall | %-Wirkungsgrad |
|---|---|---|
| **Formulierung** | | |
| **nach Beispiel 2a** | | |
| 600 | 4,25 | 75 |
| 900 | 2,5 | 85 |
| **Formulierung** | | |
| **nach Beispiel 2d** | | |
| 600 | 2,7 | 84 |
| 900 | 1,1 | 93 |
| **Unbehandelte** | | |
| **Kontrolle** | 100 | 0 |

Beispiel 5:  Wirkungsvergleich gegen Rebenpernospora

Analog zu den Versuchen in Beispiel 4 werden Weinreben der
Sorte Portugieser zweimal im vierwöchigen Abstand
behandelt und nach weiteren 4 Wochen im Vergleich zu einer
unbehandelten Kontrollgruppe bonitiert.

Man findet:

| Dithianon [ppm] | %-Befall | %-Wirkungsgrad |
|---|---|---|
| Formulierung nach Beispiel 2b | | |
| 187 | 15,3 | 65 |
| 375 | 11,9 | 73 |
| 562 | 6,3 | 86 |
| Formulierung nach Beispiel 1a | | |
| 187 | 24,4 | 45 |
| 562 | 17,3 | 61 |
| Unbehandelte Kontrolle | 44,2 | 0 |

## Beispiel 6:  Wirkungsvergleich gegen Apfelschorf

Bei Apfelbäumen der Sorte "Rome Beauty" wurden 6 Bäume je
Parzelle tropfnaß gespritzt. Die Anwendung erfolgte 10mal
im Abstand von 7 Tagen nach der letzten Behandlung.

Die Versuchsglieder wurden 2mal wiederholt.

Bei der Schorf-Auswertung wurde der Blattbefall auf 100
Langtrieben je Parzelle und der Befall auf 100 Früchten je
Parzelle bonitiert.

Man findet:

| Dithianon (ppm) | Blätter % Befall | % Wirkungs- grad | Früchte % Befall | % Wirkungs- grad |
|---|---|---|---|---|
| Formulierung nach Beispiel 1a | | | | |
| 375 | 19,3 | 79,2 | 33,5 | 66,5 |
| 600 | 12,1 | 87,1 | 21 | 79 |
| 900 | 5,3 | 94,3 | 13 | 87 |
| Formulierung nach Beispiel 2b | | | | |
| 375 | 5,5 | 93,4 | 25 | 75 |
| 600 | 4,3 | 95,4 | 11,5 | 88,5 |
| 900 | 1,3 | 98,6 | 5 | 95 |
| Ungehandelte Kontrolle | 93,6 | 0 | 100 | 0 |

## Beispiel 7:  Wirkungsvergleich gegen Apfelschorf

Bei Apfelbäumen der Sorge "Golden Delicious" wurde ein
Baum je Parzelle auf der Basis von 1.000 Ltr. Wasser/ha
behandelt. Es wurden 4 Wiederholungen je Versuchsglied
angelegt.

Die Anwendung erfolgte 10mal im Abstand von 7 Tagen.

Die erste Bonitur erfolgte 7 Tage nach der letzten
Behandlung durch Auszählen von 400 Blättern je Parzelle,
die 2. Bonitur erfolgte 30 Tage nach der letzten
Behandlung durch Auszählen der Schorfflecken in Anzahl je
100 Blätter.

Man findet:

| Dithianon (ppm) | 1.Bonitur | | 2. Bonitur | |
|---|---|---|---|---|
| | % Befall | % Wir-kungs-grad | n Flecken auf 100 Blätter | % Wir-kungs-grad |
| Formulierung nach Beispiel 1a | | | | |
| 525 | 98,6 | 94,0 | 4,3 | 95,0 |
| 375 | 96,4 | 80,4 | 7,8 | 91,0 |
| 187 | 94,3 | 75,4 | 10,0 | 88,4 |
| Formulierung nach Beispiel 2a | | | | |
| 525 | 99,5 | 97,8 | 1,3 | 98,5 |
| 375 | 98,9 | 95,3 | 2,3 | 97,3 |
| 187 | 97,5 | 89,2 | 4,4 | 94,9 |
| Ungehandelte Kontrolle | 76,8 | 0 | 86,4 | 0 |

Beispiel 8: Versuche zur Bekämpfung von Venturia inaequalis

Kultur: Apfel, Golden Delicious (Versuch 1 und 3);
        Gloster (Versuch 2)
Behandlungen: 15.5., 27.5, 10.6., 24.6., 9.7.1986.
Bonitur: 24.7.1986 (Versuch 1); 16.7. (Versuche 2 und 3)
Bonitierungsobjekt: Anzahl befallsfreier Früchte aus
                    200 Stück
Wassermenge: Bis zum Beginn des Abtropfens.
Ergebnis: Prozent befallsfreier Früchte %
          AS: Wirkstoff

| Wirkstoff | AS/100 1 | Versuch 1 | Versuch 2 | Versuch 3 |
|---|---|---|---|---|
| NFK-Na-Salz | 2,0 g | 26,0 | 14 | 21 |
| Unbehandelt | - | 24.0 | 17 | 28 |
| Penconazol | 12,5 g | 73,5 | 37 | 48 |
| Penconazol | 25,0 g | 76,5 | 76 | 82 |
| Dithianon | 12,5 g | 61,5 | 38 | 35 |
| Dithianon | 25,0 g | 54,5 | 66 | 57 |
| Dithianon | 37,5 g | 59,0 | 70 | 59 |
| Penconazol +Dithianon | 2,5 g + 12,5 g | 88,5 | 75 | 76 |
| Penconazol +Dithianon | 2,5 g + 25 g | 87,5 | 89 | 86 |
| Penconazol + Dithianon | 2,5 g + 37,5 g | 89,5 | 90 | 92 |

Beispiel 9:  Versuch zur Bekämpfung von Leptosphaeria
nodorum

|  | Versuch 1 | Versuch 2 |
|---|---|---|
| Kultur: Winter-Weizen | Sorte Arina | Sorte Arina |
| Behandlung: | 20.Juni 1986 | 18.Juni 1986 |
| Bonitur: | 7. Juli 1986 | 9. Juli 1986 |
| Bonitierungsobjekt | Fahnenblatt | Fahnenblatt |
| Bonitierungsmethode | Schätzen % Befall | Schätzen % Befall |

Ergebnis

| | | |
|---|---|---|
| NFK-Na-Salz 75 g/ha | 35 % | 100 % |
| Unbehandelt | 33 % | 100 % |
| Propiconazol 125 g/ha | 5 % | 74 % |
| Dithianon 1500 g/ha | 30 % | 100 % |
| Dithianon 750 g/ha | 33 % | 100 % |
| Propiconazol 125 g<br>+ Dithianon 500 g/ha | 2 % | 43 % |

Beispiel 10:  Versuch  zur Bekämpfung von Venturia inaequalis

Kultur: Apfel, Sorte Golden Delicious

Behandlungen: 25.4, 5.5., 16.5., 27.5., 9.6., 23.6., 10.7.,
21.7.1986

Wasseraufwandmenge:  1000 - 2000 Ltr/ha

| Wirkstoff | A.S./100 Ltr. | % befallene Blattfläche | |
| --- | --- | --- | --- |
| | | 9.6.86 | 1.8.86 |
| NFK-Na-Salz | 3,75 g | 48 | 56 |
| Unbehandelt | | 47 | 53 |
| Penconazol | 2,5 g | 28 | 27 |
| Dithianon | 37,5 g | 39 | 19 |
| Penconazol + Dithianon | 2,5 g 25,0 g | 12 | 6 |

Beispiel 11: Bekämpfung von Venturia inaequalis

Äpfel der Sorte "Lodi"

6 Anwendungen in vierzehntätigem Abstand
Bonitierung 14 Tage nach der letzten Behandlung

| Wirkstoff | Konzentration (ppm) | % Befall |
|---|---|---|
| Kontrolle | – | 42 |
| Triadimefon | 25 | 12 |
| Dithianon | 375 | 11 |
| Fenerimol | 36 | 2 |
| Fenarimol | 24 | 7 |
| Triadimefon + Dithianon | 25 250 | 2 |
| Fenarimol + Dithianon | 24 250 | 1 |

## Beispiel 12: Bekämpfung von Venturia inaequalis

Apfelbäume der Sorte "Rome Beauty";

10 Anwendungen mit einwöchigem Abstand, Bonitierung 1 Woche nach der letzten Behandlung.

| Wirkstoff | Konzentration (ppm) | % befallene Blätter | % befallene Früchte |
|---|---|---|---|
| Kontrolle | – | 93 | 100 |
| Dithianon + BFK-Na-Salz | 375 19 | 19 | 33 |
| Dithianon + NFK-Na-Salz | 600 30 | 11 | 21 |
| Triforine | 300 | 8 | 12 |
| Triforine + Dithianon + NFK-Na-Salz | 300 375 19 | 1 | 1 |
| Bitertanol | 200 | 7 | 9 |
| Bitertanol + Dithianon + NFK-Na-Salz | 200 375 19 | 2 | 5 |

0236689

<u>Beispiel 13:</u> Bekämpfung von Venturia inaequalis

Apfelbäume der Sorte "Imperatore";

10 Anwendungen mit einwöchigem Abstand, Bonitierung 1 Monat nach der letzten Behandlung.

| Wirkstoff | Konzentration (ppm) | % befallene Blätter | Zahl der Flecken |
|---|---|---|---|
| Kontrolle | – | 82 | 931 |
| Dithianon | 1200 | 44 | 284 |
| Triforine | 300 | 25 | 113 |
| Triforine + Dithianon | 150 + 600 | 3,8 | 5 |
| Fenarimol | 70 | 19 | 73 |
| Fenarimol +Dithianon | 70 600 | 4,5 | 12 |
| Biloxazol | 150 | 24 | 35 |
| Biloxazol + Dithianon | 150 600 | 8 | 17 |
| Nuarimol | 70 | 31 | 125 |
| Nuarimol + Dithianon | 70 600 | 6 6 | 20 20 |

## Beispiel 14: Bekämpfung von Venturia inaequalis

Apfelbäume der Sorte "Imperatore";

17 Anwendungen mit einwöchigem Abstand

| Wirkstoff | Konzentration (ppm) | % befallene Blätter | Zahl der Früchte |
|---|---|---|---|
| Kontrolle | — | 95 | 100 |
| Triforine | 250 | 5 | 16 |
| Dithianon | 500 | 17 | 22 |
| Triforine + Dithianon | 250 250 | 4 | 4 |
| Triforine + Dithianon + NFK-Na-Salz | 250 250 12,5 | 1 | 3 |

Beispiel 15: Bekämpfung von Septoria tritici

Winterweizen;

Anwendung im Stadium 37-39,

Bonitierung 42 Tage nach der Behandlung

| Wirkstoff | Menge (g/ha) | % Wirkung | | |
|---|---|---|---|---|
| | | Versuch 1 | Versuch 2 | Versuch 3 |
| Kontrolle | – | 0 | 0 | 0 |
| Dithianon | 750 | 9 | 21 | 21 |
| Flusilazole | 120 | 33 | 29 | 37 |
| Dithianon + Flusilazole | 500 94 | 75 | 64 | 89 |
| Dithianon + Flusilazole | 750 94 | 70 | 67 | 92 |

0236689

Beispiel 16: Bekämpfung von Leptosphaeria nodorum
(Spelzenbräune)

Winterweizen, Sorte "Basalt";

1 Anwendung,

Bonitierung 1 Monat nach Behandlung

| Wirkstoff | Menge | % Befall |
|---|---|---|
| Kontrolle | – | 30 |
| Dithianon | 750 | 22 |
| Prochloraz | 450 | 16 |
| Triadimenol | 125 | 17 |
| Fenpropimorph | 750 | 28 |
| Flutriafol | 120 | 14 |
| Flusilazol | 200 | 10 |
| Dithianon + Fenpropimorph | 750 750 | 12 |
| Dithianon + Prochloraz | 560 450 | 10 |
| Dithianon + Flutriafol | 560 24 | 7 |
| Dithianon + Flusilazol | 560 200 | 6 |

**Beispiel 17:** Bekämpfung von Leptosphaeria nodorum

Winterweizen, Sorte "Kolobri";
Bonitierung 1 Monat nach Behandlung

| Wirkstoff | Menge (g/ha) | % Befall |
|---|---|---|
| Kontrolle | – | 12 |
| Dithianon | 500 | 8 |
| Fenpropimorph | 750 | 11 |
| Dithianon + Fenpropimorph | 500 750 | 4 |

**Beispiel 18: Bekämpfung von Leptosphaera nodorum**

Winterweizen, Sorte "Bernina";

Bonitierung 2 und 4 Wochen nach Behandlung

| Wirkstoff | Menge (g/ha) | % Befall der Spelzen (nach 4 Wochen) | % Befall der Blätter (nach 2 Wochen) |
|---|---|---|---|
| Kontrolle | – | 73 | 41 |
| Dithianon + NFK-Na-Salz | 560 28 | 30 | 35 |
| Dithianon + NFK-Na-Salz | 750 + 37,5 | | |
| Flutriafol | 120 | 34 | 23 |
| Flusilazol | 200 | 12 | 14 |
| Dithianon +Flutriafol + NFK-Na-Salz | 750 94 37,5 | 7 | 18 |
| Dithianon + Flutriafol + NFK-Na-Salz | 500 120 25 | 6 | 17 |
| Dithianon + Flusilazol + NFK-Na-Salz | 500 200 25 | 8 | 5 |

Beispiel 19: Bekämpfung von Phytopthora infestans

Kartoffeln, Sorte "Hansa";

5 Anwendungen mit 14-tätigem Abstand,
Bonitierung 7 Tage nach der letzten Behandlung.

| Wirkstoff | Menge (g/ha) | % Befall der Blätter |
|---|---|---|
| Kontrolle | – | 89 |
| Metalaxyl | 250 | 40 |
| Dithianon | 1500 | 53 |
| Metalaxyl + Dithianon | 200 375 | 22 |

## Beispiel 20: Bekämpfung von Phytophthora infestans

Kartoffeln, Sorte "Ukapa";

3 Anwendungen,
Bonitierung 14 Tage nach der letzten Behandlung

| Wirkstoff | Menge (g/ha) | % Befall der Blätter |
|---|---|---|
| Kontrolle | — | 89 |
| Dithianon | 1200 | 72 |
| Oxadixyl | 250 | 75 |
| Oxadixyl + Dithianon | 250 350 | 56 |
| Oxadixyl + Dithianol + NFK-Na-Salz | 250 350 35 | 31 |

0236689

## Beispiel 21: Bekämpfung von Venturia inaequalis

|  | Versuch 1 | Versuch 2 |
|---|---|---|
| Kultur Apfel, | Sorte Golden Delicious | Sorte Oregon Spur |
| Behandlungen: | 2.4., 17.4., 30.4., 14.5., 29.5., 11.6., | 1.4., 14.4., 18.4., 12.7., 26.5., 9.6., 24.6. |

Bonitur: ca. 1 Woche nach der letzten Behandlung.

| Wirkstoff | Versuch 1 % befallene Blätter | Versuch 2 % befallene Blätter |
|---|---|---|
| Unbehandelt | 87 | 88 |
| Myclobutanol 45 g/ha | 72 | – |
| " 30 g/ha | 72 | 15 |
| Dithianon 500 g/ha | 76 | 28 |
| Myclobutanol 30 g/ha + Dithianon 300 g/ha | 54 | 8 |

# Patentansprüche

1. Fungizide Mittel auf der Basis von Dithianon und bekannten Hilfs- und/oder Trägerstoffen, dadurch gekennzeichnet, daß die Mittel mindestens einen weiteren Wirkstoff aus der Gruppe der Ergosterol-Biosynthese-Hemmer (Typ F1) und RNS-Polymerase-Hemmer (Typ F2) und/oder daß die Mittel als Hilfsstoffe Naphthalinsulfonsäure-Formaldehyd-Kondensationsprodukte bzw. dessen Alkali-, Erdalkali- oder Ammoniumsalze enthalten.

2. Fungizide Mittel, dadurch gekennzeichnet, daß sie als einzigen Wirkstoff Dithianon und unter den Hilfsstoffen mindestens ein Naphthalinsulfonsäure-Formaldehyd-Kondensationsprodukt bzw. deren Alkali-, Erdalkali- oder Ammoniumsalz enthalten.

3. Fungizide Mittel nach Anspruch 1, dadurch gekennzeichnet, daß sie als fungizid aktive Bestandteile Dithianon und mindestens einen Wirkstoff des Typs F1 und/oder des Typs F2 enthalten.

4. Fungizide Mittel nach Anspruch 1 oder 2, dadurch gekennzeichnet, daß die Naphthalinsulfonsäure-Formaldehyd-Kondensationsprodukte eine mittlere Molekülgröße von 4 Naphthalinsulfonsäureeinheiten aufweisen.

5. Fungizide Mittel nach Anspruch 1, 2 oder 4, gekennzeichnet durch ein Gewichtsverhältnis von 7 : 1 bis 80 : 1, vorzugsweise 10 : 1 bis 60 : 1, zwischen Dithianon und Naphthalinsulfonsäure-Formaldehyd-Kondensationsprodukt bzw. seinen Salzen.

6. Fungizide Mittel nach Anspruch 1, 3 oder 4, dadurch gekennzeichnet, daß das Gewichtsverhältnis zwischen Dithianon und der Gesamtmenge der Fungizide des F1- und/oder F2-Typs 1 : 1 bis 15 : 1 beträgt.

7. Fungizide Zubereitungen nach Anspruch 1, 3, 4, 5 oder 6, dadurch gekennzeichnet, daß die Fungizide des F1- und/oder F2-Typs aus der folgenden Gruppe ausgewählt sind:
Fenarimol, Bitertanol, Prochloraz, Etaconazol, Penconazol, Myclobutanil, Flutriafol, Flusiafol, Triforin, Buthiobat, EL 241, Nuarimol, Triarimol, Fenpropidin, Imazalil, Fenapanil, Pirifenox, Dichlobutrazol, Fluotrimazol, Propiconazol, Triadimefon, Triadimenol, Hexaconasol, Dodemorph, Fenpropimorph, Tridemorph, Benalaxyl, Oxadixyl, Milfuran, Cyprofuran und Furalaxyl.

8. Verwendung von Mitteln nach Anspruch 1 bis 7 zur Bekämpfung phytopathogener Pilze.